# EUROPEAN PATENT APPLICATION

(11) **EP 4 333 524 A1**
(43) Date of publication of application: **06.03.2024**
(21) Application number: 21939300.6
(22) Date of filing: 28.04.2021
(51) Int. Cl.: H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/017070
(87) International publication number: WO 2022/230141

(57) **Abstract**

A terminal according to one aspect of the present disclosure includes: a control section that assumes at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets; and a receiving section that receives at least one of one or more BFD-RSs included in the BFD-RS set and one or more NBI-RSs included in the NBI-RS set, determined based on the assumption. According to one aspect of the present disclosure, it is possible to appropriately perform at least one of BFD and BFR.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied that a terminal performs beam failure detection (BFD) / beam failure recovery (BFR) .

However, it is not clear, when the configuration / information element of a reference signal (RS) for BFD/BFR is not provided, how to determine the RS for BFD/BFR. Unless the RS for BFD/BFR is determined appropriately, monitoring accuracy / detection accuracy may decrease.

Thus, an object of the present disclosure is to provide a terminal, a radio communication method, and a base station that can appropriately perform at least one of BFD and BFR.

### Solution to Problem

A terminal according to one aspect of the present disclosure includes: a control section that assumes at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets; and a receiving section that receives at least one of one or more BFD-RSs included in the BFD-RS set and one or more NBI-RSs included in the NBI-RS set, determined based on the assumption.

### Advantageous Effects of Invention

According to one aspect of the present disclosure, it is possible to appropriately perform at least one of BFD and BFR.

### Brief Description of Drawings

[FIG. 1] FIG. 1 is a diagram to show an example of the number of RLM-RSs.
[FIG. 2] FIG. 2 is a diagram to show an example of a beam recovery procedure.
[FIG. 3] FIG. 3 is a diagram to show an example of combinations of the number of total BFD-RS sets and the number of total NBI-RS sets.
[FIG. 4] FIG. 4 is a diagram to show examples of the number of BFD-RS sets and the number of NBI-RS sets according to a third embodiment.
[FIG. 5] FIG. 5 is a diagram to show an example of a schematic structure of a radio communication system according to one embodiment.
[FIG. 6] FIG. 6 is a diagram to show an example of a structure of a base station according to one embodiment.
[FIG. 7] FIG. 7 is a diagram to show an example of a structure of a user terminal according to one embodiment.
[FIG. 8] FIG. 8 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

For a PDCCH and a PDSCH, a QCL type A RS is configured necessarily while a QCL type D RS may be configured optionally. Since it is difficult to estimate Doppler shift, delay, and the like, based on oneshot reception of a DMRS, a QCL type A RS is used for improvement of channel estimation accuracy. A QCL type D RS is used for reception beam determination at the time of DMRS reception.

For example, TRSs 1-1, 1--2, 1--3, and 1--4 are transmitted, and TRS 1-1 is notified as a QCL type C/D RS, based on the TCI state of a PDSCH. When the UE is notified of the TCI state, the UE can use information obtained as a result of past periodic reception/measurement of TRS 1-1, for reception / channel estimation of a DMRS for a PDSCH. In this case, the QCL source of the PDSCH is TRS 1-1, and a QCL target is the DMRS for the PDSCH.

### (Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a given QCL type (for example, QCL type D).

A plurality of PDSCHs (which may be referred to as multi-PDSCH (multiple PDSCHs)) from the multi-TRP may be scheduled by using one DCI (single DCI, single PDCCH) (single master mode, multi-TRP based on single DCI (single-DCI based multi-TRP)). The plurality of PDSCHs from the multi-TRP may be separately scheduled by using DCIs (multi-DCI, multi-PDCCH (multiple PDCCHs)) (multi-master mode, multi-TRP based on multi-DCI (multi-DCI based multi-TRP)).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Radio Link Monitoring (RLM))

In NR, radio link monitoring (RLM) is used.

In NR, a network (NW, for example, a base station) may configure, for each BWP, a radio link monitoring reference signal (Radio Link Monitoring RS (RLM-RS)) for a UE by using higher layer signaling. The UE may receive configuration information for RLM (for example, a "RadioLinkMonitoringConfig" information element of RRC).

The configuration information for RLM may include failure detection resource configuration information (for example, a higher layer parameter "failureDetectionResourcesToAddModList"). The failure detection resource configuration information may include a parameter related to RLM-RS (for example, a higher layer parameter "RadioLinkMonitoringRS") .

The parameter related to RLM-RS may include information indicating correspondence with a purpose of RLM, an index corresponding to the resource of an RLM-RS (for example, an index included in a higher layer parameter "failureDetectionResources" (RadioLinkMonitoringRS in failureDetectionResourcesToAddModList)). The index may be, for example, an index of the configuration of a CSI-RS resource (for example, a non-zero-power CSI-RS resource ID) or may be an SS/PBCH block index (SSB index). The information of the purpose may indicate a beam failure or a (cell-level) Radio Link Failure (RLF), or both of these.

The UE may identify an RLM-RS resource, based on the index corresponding to the RLM-RS and perform RLM by using the RLM-RS resource.

In an RLM procedure of Rel. 16, the UE follows the following implicit RLM-RS determination procedure.

### {Implicit RLM-RS Determination Procedure}

If the UE is not provided with an RLM-RS (RadioLinkMonitoringRS) and the UE is provided with a TCI state including one or more CSI-RSs for PDCCH reception, the UE follows Procedures 1 to 4 below.

### {{Procedure 1}}

If an active TCI state for PDCCH reception includes only one RS, the UE uses the RS provided for the active TCI state for PDCCH reception, for RLM.

### {{Procedure 2}}

If an active TCI state for PDCCH reception includes two RSs, the UE assumes that one of the RSs is with QCL type D and uses the RS with QCL type D for RLM. The UE does not assume that both of the RSs are with QCL type D.

### {{Procedure 3}}

The UE is not required to use an aperiodic or semi-persistent RS for RLM.

### {{Procedure 4}}

For Lₘₐₓ = 4, the UE selects N_{RLM} RSs provided for an active TCI state for PDCCH reception, in a plurality of CORESETs associated with a plurality of search space sets, in an order from the smallest monitoring periodicity. If more than one CORESET is associated with a plurality of search space sets with the same monitoring periodicity, the UE determines the order of the CORESETs from the highest CORESET index.

Here, Lₘₐₓ denotes the largest number of SS/PBCH block indices in a cell. The largest number of the SS/PBCH blocks transmitted in a halfframe is Lₘₐₓ.

As described above, when the UE is not provided with an RLM-RS, the UE performs implicit RLM-RS determination and uses an active TCI state for PDCCH reception for RLM. When Lₘₐₓ = 4, the UE selects N_{RLM} RSs first in an ascending order of monitoring periodicities of search space sets and then in a descending order of CORESET indices. The UE selects a CORESET.

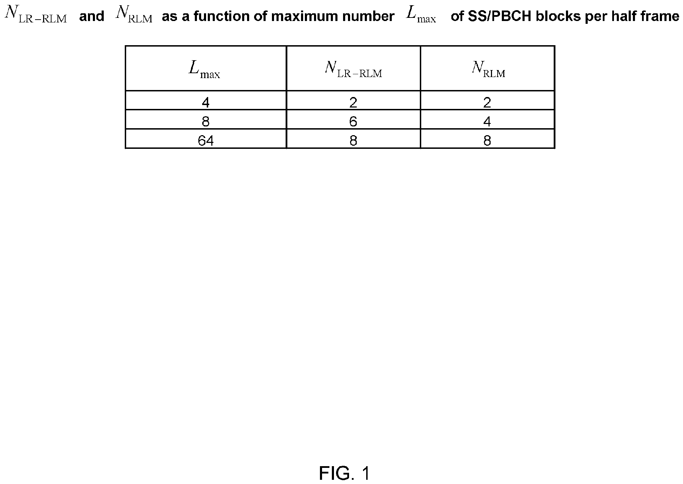

The UE can be configured with up to N_{LR-RLM} RLM-RSs for a link recovery procedure and RLM. Up to N_{RLM} RLM-RSs are used for RLM depending on Lₘₐₓ, from the N_{LR-RLM} RLM-RSs. In Rel. 16, as shown in FIG. 1, NRLM = 2 when Lₘₐₓ = 4, N_{RLM} = 4 when Lₘₐₓ = 8, and N_{RLM} = 8 when Lₘₐₓ = 64.

### (Beam Failure Detection (BFD) / Beam Failure Recovery (BFR))

In NR, communication is performed by using beam forming. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, a procedure for switching to another beam (which may be referred to as beam recovery (BR), beam failure recovery (BFR), L1/L2 (Layer 1/Layer 2) beam recovery, or the like) in a case where quality of a specific beam deteriorates. Note that the BFR procedure may be referred to simply as BFR.

Note that beam failure (BF) in the present disclosure may be referred to as link failure.

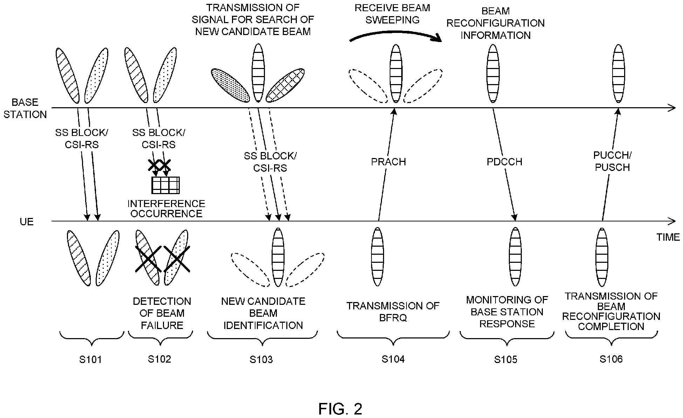

FIG. 2 is a diagram to show an example of the beam recovery procedure in Rel-15 NR. The number of beams and the like are just examples, and are not limited to this. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS)), an RS to be used for a beam recovery procedure (BFR-RS), and the like.

At step S102, due to radio waves from the base station being interfered, the UE fails to detect a BFD-RS (or reception quality of an RS deteriorates). Such interference may occur due to an influence of an obstacle, fading, interference, or the like between the UE and the base station, for example.

The UE detects beam failure when a given condition is satisfied. For example, the UE may detect occurrence of the beam failure when a BLER (Block Error Rate) for all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). Instead of the RS measurement or in addition to the RS measurement, beam failure detection may be performed based on downlink control channel (Physical Downlink Control Channel (PDCCH)) or the like. The BFD-RS may be expected to be quasi-co-located (QCLed) with a DMRS for a PDCCH monitored by the UE.

Here, QCL is an indicator indicating statistical properties of the channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

A higher layer (for example, the MAC layer) of the UE may start a given timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification given times (for example, beamFailureInstanceMaxCount configured by RRC) or more until the timer expires.

When there is no notification from the UE or when receiving a given signal (beam recovery request at step S104) from the UE, the base station may judge that the UE has detected beam failure.

At step S103, for beam recovery, the UE starts a search for a new candidate beam for use in new communication. The UE may select, by measuring a given RS, the new candidate beam corresponding to the RS. The RS measured at step S103 may be referred to as a new candidate RS, an RS for new candidate beam identification, an NCBI-RS (New Candidate Beam Identification RS), an RS for new beam identification, an RS for new beam identification, NBI-RS (New Beam Identification RS), a CBI-RS (Candidate Beam Identification RS), a CB-RS (Candidate Beam RS), and the like. The NBI-RS may be the same as the BFD-RS, or may be different from the BFD-RS. Note that the new candidate beam may be referred to simply as a candidate beam or a candidate RS.

The UE may determine a beam corresponding to an RS satisfying a given condition as the new candidate beam. The UE may determine a new candidate beam from among configured NBI-RSs, based on an RS with an L1-RSRP exceeding a threshold, for example. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NBI-RS (for example, resources, numbers, the number of ports, precoding, and the like for the RS), information related to new beam identification (NBI) (for example, the above-mentioned threshold value), and the like may be configured (notified) for the UE by using higher layer signaling or the like. The information related to the new candidate RS (or NBI-RS) may be acquired based on information related to the BFD-RS. The information related to the NBI-RS may be referred to as information related to resources for NBI or the like.

Note that the BFD-RS, the NBI-RS, and the like may be interpreted as a radio link monitoring reference signal (Radio Link Monitoring RS (RLM-RS)), and vice versa.

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted, for example, by using at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH.

The BFRQ may include information of the new candidate beam / new candidate RS identified at step S103. Resources for the BFRQ may be associated with the new candidate beam. The information of the beam may be notified by using a beam index (BI), a port index of a given reference signal, an RS index, a resource index (for example, a CSI-RS resource indicator (CRI)), an SSB resource indicator (SSBRI), or the like.

For Rel-15 NR, CB-BFR (Contention-Based BFR) that is BFR based on contention-based random access (RA) procedure and CF-BFR (Contention-Free BFR) that is BFR based on non-contention based random access procedure are studied. In the CB-BFR and the CF-BFR, the UE may transmit a preamble (also referred to as an RA preamble, a random access channel (Physical Random Access Channel (PRACH)), a RACH preamble, or the like) as the BFRQ by using PRACH resources.

In the CB-BFR, the UE may transmit a preamble randomly selected from one or a plurality of preambles. In contrast, in the CF-BFR, the UE may transmit a preamble allocated by the base station in a UE-specific manner. In the CB-BFR, the base station may allocate the same preamble for a plurality of UEs. In the CF-BFR, the base station may allocate a preamble in a UE-dedicated manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both the CB-BFR and the CF-BFR, information related to a PRACH resource (RA preamble) may be notified by higher layer signaling (RRC signaling or the like), for example. For example, the information may include information indicating a correspondence relationship between a detected DL-RS (beam) and the PRACH resource, and a different PRACH resource may be associated with each DL-RS.

At step S105, the base station that has detected the BFRQ transmits a response signal (which may be referred to as gNB response or the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) cyclic-redundancy-check (CRC) scrambled by a UE identifier (for example, a cell-radio RNTI (C-RNTI)). The UE may judge at least one of a transmit beam and a receive beam to use, based on beam reconfiguration information.

The UE may monitor the response signal, based on at least one of a control resource set (CORESET) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, and the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a given number of times or a case that a beam failure recovery timer (Beam-failure-recovery-Timer) has expired.

In Rel. 15, it is supported to perform a beam recovery procedure for beam failure detected in an SpCell (PCell/PSCell) (for example, notification of BFRQ), by using a random access procedure. In contrast, in Rel. 16, it is supported to perform a beam recovery procedure for beam failure detected in an SCell (for example, notification of BFRQ), by using at least one of PUCCH (for example, scheduling request (SR)) transmission for BFR and a MAC CE (for example, UL-SCH) transmission for BFR.

For example, the UE may use two MAC CE-based steps to transmit information related to the beam failure. The information related to the beam failure may include information related to the cell in which the beam failure has been detected and information related to a new candidate beam (or a new candidate RS index).

### {Step 1}

In a case where BF is detected, PUCCH-BFR (scheduling request (SR)) may be transmitted from the UE to a PCell/PSCell. Subsequently, a UL grant (DCI) for Step 2 below may be transmitted from the PCell/PSCell to the UE. When a MAC CE (or a UL-SCH) for transmitting information related to a new candidate beam is present in the case where beam failure is detected, Step 2 (for example, MAC CE transmission) may be performed with the omission of Step 1 (for example, PUCCH transmission).

### {Step 2}

Subsequently, the UE may transmit information related to the cell in which the beam failure has been detected (failed) (for example, a cell index) and the information related to the new candidate beam to the base station (PCell/PSCell) via an uplink channel (for example, a PUSCH) by using a MAC CE. Thereafter, through the BFR procedure, the QCL of the PDCCH/PUCCH/PDSCH/PUSCH may be updated to a new beam after a given period (for example, 28 symbols) from reception of a response signal from the base station.

Note that these step numbers are just numbers for description, and a plurality of steps may be combined with each other, or the order of the steps may be changed. Whether to perform the BFR may be configured for the UE by using higher layer signaling.

### (BFD-RS)

In Rel. 16, for each BWP of one serving cell, a UE can be provided with a set qo-bar of periodic (P)-CSI-RS resource configuration indices by failure detection resources (failureDetectionResources, failureDetectionResourcesToAddModList, RadioLinkMonitoringConfig) and one set q₁-bar of at least one of P-CSI-RS resource configuration indices and SS-PBCH block indices by a candidate beam RS list (candidateBeamRSList), an extended candidate beam RS list (candidateBeamRSListExt-r16), or a candidate beam RS list for SCell (candidateBeamRSSCellList-r16) .

Here, qo-bar corresponds to a representation of "q₀" with an overline. In the following, qo-bar is represented simply as q₀. q₁-bar corresponds to a representation of "q₁" with an overline. In the following, q₁-bar is represented simply as q₁.

The set qo of P-CSI-RS resources provided by the failure detection resources may be referred to as explicit BFD-RSs.

The UE may use an RS resource corresponding to an index included in at least one set of the set qo and the set q₁ to perform L1-RSRP measurement and the like, to detect beam failure.

Note that, in the present disclosure, the above-described higher layer parameter indicating information of indices corresponding to resources for BFD being provided may be interpreted as resources for BFD being configured, BFD-RSs being configured, and the like, and vice versa. In the present disclosure, resources for BFD, set qo of periodic CSI-RS resource configuration indices or SSB indices, BFD-RSs, a BFD-RS set, and an RS set may be interchangeably interpreted.

If the UE is not provided with qo by failure detection resources (failureDetectionResources) for one BWP of the serving cell, the UE determines RSs (set qo) to use for the BFD procedure, in accordance with the following implicit BFD-RS determination procedure.

### {Implicit BFD-RS Determination Procedure}

The UE determines to include, in the set q₀, P-CSI-RS resource configuration indices having the same values as those of the RS indices in the RS set indicated by a TCI state (TCI-State) for the corresponding CORESET to be used by the UE for monitoring of a PDCCH. If two RS indices are present in one TCI state, the set q₀ includes RS indices with a QCL type D configuration for the corresponding TCI state. The UE assumes that the set q₀ includes up to two RS indices. The UE assumes single-port RSs in the set q₀.

This set qo may be referred to as an implicit BFD-RSs.

In this way, the UE determines BFD-RSs (RS set) according to a TCI state for PDCCH. The UE assumes that the RS set includes up to two RSs.

### (Analysis)

For Rel. 17 or later versions, it is studied to introduce configuration of an independent BFD-RS for each TRP in beam failure detection in a plurality of TRPs. Here, each TRP may be associated with one or more BFD-RSs.

In the present disclosure, one or more BFD-RSs may be referred to as a set of BFD-RSs (BFD-RS set). In Rel. 15, two BFD-RSs at maximum are configured for each BWP. For example, the two BFD-RSs may be referred to as one BFD-RS set. In Rel. 17 or later versions, the number of BFD-RSs per BWP need not be two, and the number of BFD-RSs may be determined based on UE capability, for example.

For Rel. 17 or later versions, it is studied to support a plurality of (for example, two) BFD-RS sets for each BWP and support N (N is any integer) ones at maximum for each BFD-RS set, in BFR in a plurality of TRPs.

Moreover, for Rel. 17 or later versions, it is studied to introduce, when one or more NBI-RSs (NBI-RS set) are configured for each TRP in new beam identification in a plurality of TRPs, configuration of an independent NBI-RS set for each TRP. In the present disclosure, one or more NBI-RSs may be referred to as a set of NBI-RSs (NBI-RS set).

For Rel. 17 or later versions, it is studied to associate one BFD-RS set and one NBI-RS set to have a one-to-one correspondence.

In consideration of these studies, for example, two BFD-RS sets and two BFD-RS sets at maximum can be configured for each TRP for BFR in a plurality of TRPs based on single/multi-DCI. In other words, zero, one, or two BFD-RS sets can be configured for each TRP in BFR in TRPs. In such a case, a problem is, in a case where two BFD-RS sets are configured, whether an NW can configure any one BFD-RS (NBI-RS) set or need configure two BFD-RS (NBI-RS) sets.

Moreover, it is not sufficiently studied either about the number of NBI-RS sets that can be configured / need be configured and a permitted combination(s) of the number of BFD-RS sets and the number of NBI-RS sets.

If it is insufficient to study configuration and association of a BFD-RS set(s) / an NBI-RS set(s) as described above, BFD/BFR in a plurality of TRPs based on single/multi-DCI cannot be appropriately controlled, which may cause decrease in communication quality and throughput.

Thus, the inventors of the present invention came up with the idea of a method of configuring/determining a BFD-RS set(s) / NBI-RS set(s).

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, support, control, controllable, operate, and operable may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a pool, a set, a group, a list, and a candidate may be interchangeably interpreted.

In the present disclosure, a DMRS, a DMRS port, and an antenna port may be interchangeably interpreted.

In the present disclosure, a special cell, an SpCell, a PCell, and a PSCell may be interchangeably interpreted.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS including TRS information (higher layer parameter trs-Info), an NZP-CSI-RS resource in an NZP-CSI-RS resource set including TRS information, an NZP-CSI-RS resource in an NZP-CSI-RS resource set constituted of a plurality of NZP-CSI-RS resources of the same antenna port, and a TRS resource may be interchangeably interpreted. In the present disclosure, a CSI-RS resource, a CSI-RS resource set, a CSI-RS resource group, and an information element (IE) may be interchangeably interpreted.

In the present disclosure, a panel, an Uplink (UL) transmission entity, a TRP, a spatial relation, a control resource set (CORESET), a PDSCH, a codeword, a base station, an antenna port for a given signal (for example, a demodulation reference signal (DMRS) port), an antenna port group for a given signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, location of one TCI state (ordinal number, a first TCI state or a second TCI state) of two TCI states corresponding to one codepoint of a field in DCI, and a TRP may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, a single TRP, a single-TRP system, single-TRP transmission, and a single PDSCH may be interchangeably interpreted. In the present disclosure, multi-TRP, multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, TRP #1 (first TRP) may correspond to CORESET pool index = 0 or correspond to a first TCI state of two TCI states corresponding to one codepoint of a TCI field. TRP #2 (second TRP) may correspond to CORESET pool index = 1 or correspond to a second TCI state of the two TCI states corresponding to the one codepoint of the TCI field.

In the present disclosure, CORESET0, a CORESET with index 0, and a common CORESET may be interchangeably interpreted.

### (Radio Communication Method)

In the present disclosure, the number of total/final BFD-RS sets / the number of total/final NBI-RS sets may be determined by an explicit configuration or determined by an implicit determination rule.

Zero BFD-RS sets may be configured explicitly. In other words, no BFD-RS set may be configured.

When no BFD-RS set is configured, an implicit BFD-RS set determination rule may be applied.

For example, one BFD-RS set in total may be determined. A BFD-RS(s) included in the BFD-RS set may be an RS(s) having a QCL relationship with the CORESET.

For example, two BFD-RS sets in total may be determined. The BFD-RS(s) included in the BFD-RS set may be an RS(s) having a QCL relationship with the CORESET (QCLed with CORESET) of each CORESET pool index in a plurality of TRPs based on multi-DCI.

When no BFD-RS set is configured, a new RRC parameter for indicating enabling/disabling of implicit BFD-RS set determination may be configured. For example, when the parameter is to indicate disable (not enable), the number of determined total BFD-RS sets may be zero.

When no BFD-RS set is configured, a new RRC parameter for indicating the number of total/implicit BFD-RS sets derived by a UE may be configured. For example, the parameter may indicate zero, one, or two. When the parameter indicates one or two, one or two BFD-RS sets in total may be determined. When the parameter indicates zero, the number of determined total BFD-RS sets may be zero.

One BFD-RS set may be configured explicitly. The configured BFD-RS set may be used for BFR for each cell, or may be used, if association between a TRP and a BFD-RS is configured, for BFR for a specific TRP in BFR for each TRP.

When one BFD-RS set is configured explicitly, an implicit BFD-RS set determination rule need not be applied. In this case, one BFD-RS set in total may be configured for BFR for each cell. In this case, one BFD-RS set may be configured for a specific TRP in BFR for each TRP, and no BFD-RS set may be determined for another TRP.

When one BFD-RS set is configured explicitly, an implicit BFD-RS set determination rule may be applied additionally. In this case, one BFD-RS set may be configured for a specific TRP in BFR for each TRP, and one BFD-RS set based on the implicit BFD-RS set determination rule need not be determined for another TRP. For example, the BFD-RS(s) included in the BFD-RS set for such another TRP may be an RS(s) having a QCL relationship with the CORESET of a CORESET pool index different from the CORESET pool index of the specific TRP in a plurality of TRPs based on multi-DCI.

When one BFD-RS set is configured explicitly, a new RRC parameter for indicating enabling/disabling of implicit BFD-RS set determination may be configured. For example, when the parameter is to indicate disable (not enable), the number of determined total BFD-RS sets may be zero.

When one BFD-RS set is configured explicitly, a new RRC parameter for indicating the number of total/implicit BFD-RS sets derived by the UE may be configured. For example, the parameter may indicate zero or one. When the parameter indicates one, one BFD-RS set in total may be determined. When the parameter indicates zero, the number of determined total BFD-RS sets may be zero.

The new RRC parameter may indicate information related to a TRP implicitly deriving a BFD-RS set (for example, information related to a CORESET pool index). For example, when it is indicated to implicitly derive one BFD-RS set, the new RRC parameter may indicate information related to a TRP implicitly deriving a BFD-RS set (for example, information related to a CORESET pool index).

Two BFD-RS sets may be configured explicitly. The configured BFD-RS sets may be used for a BFD-RS(s) of each TRP in BFR in the TRP.

When two BFD-RS sets are configured explicitly, an implicit BFD-RS set determination rule need not be applied.

Note that, in the present disclosure, when there are a plurality of (for example, two) RS types for a CORESET, an RS having a QCL relationship with the CORESET (QCLed with CORESET) may mean an RS of a specific QCL type (for example, QCL type D) of the CORESET.

Note that, in the present disclosure, a signaling structure, signaling, a configuration, a structure, configuration information, an indication, indication information, and the like may be interchangeably interpreted.

In the present disclosure, BFR, a BFR configuration, a BFR procedure, BFD, a BFD procedure, a BFD-RS, a BFD-RS configuration, RLM, an RLM configuration, an RLM procedure, an RLM-RS, an RLM-RS configuration, NBI, an NBI configuration, an NBI-RS, and an NBI-RS configuration may be interchangeably interpreted. In the present disclosure, BFR per cell, cell-specific BFR, and Rel-15/16 BFR may be interchangeably interpreted. In the present disclosure, BFR per TRP, TRP-specific BFR, and Rel-17 (or later version) BFR may be interchangeably interpreted.

In the present disclosure, a given parameter/number/combination being configured may mean the given parameter/number/combination being configured explicitly. A given parameter/number/combination being determined may mean the given parameter/number/combination being determined based on an implicit rule.

In each embodiment of the present disclosure below, a case where the number of BFD-RS sets and the number of NBI-RS sets are two at maximum will be described. However, these numbers may be two or more, and "two" may be interpreted as a "plurality of."

### <First Embodiment>

A combination of the number of total BFD-RS sets and the number of total NBI-RS sets for BFR for each TRP in a given CC may be configured/determined.

Note that one or more RSs (RS resources) may be configured for one set, depending on / based on UE capability.

In existing (Rel-16 or previous version) specifications, no concept of a BFD-RS set and an NBI-RS set is defined. Each set may be associated with a TRP in a case of using a plurality of TRPs.

A total BFD-RS set in the present disclosure may include at least one of a BFD-RS configured explicitly and a BFD-RS determined implicitly.

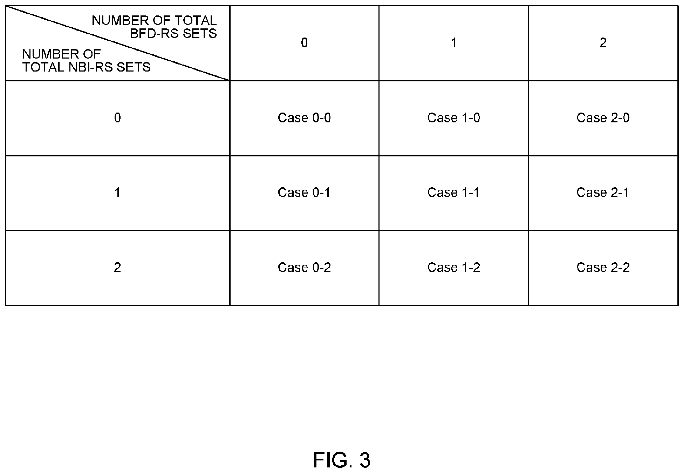

FIG. 3 is a diagram to show an example of combinations of the number of total BFD-RS sets and the number of total NBI-RS sets. In the example shown in FIG. 3, each of the number of total BFD-RS sets and the number of total NBI-RS sets can be zero, one, or two.

When it is assumed that the number of total BFD-RS sets is X and the number of total NBI-RS sets is Y, a case corresponding to the numbers is described as "case X-Y," which will be described below in detail in each of the embodiments of the present disclosure.

Only a given combination(s) among the combinations of the number of BFD-RS sets and the number of NBI-RS sets may be permitted (as a matter of specifications).

All the combinations of the number of BFD-RS sets and the number of NBI-RS sets may be permitted (as a matter of specifications).

For example, a case where the number of total NBI-RS sets is larger than the number of total BFD-RS sets (for example, Case 0-1, Case 0-2, and Case 1-2 shown in FIG. 3) need not be permitted. The UE need not assume/expect a case where the number of configured/determined total NBI-RS sets is larger than the configured/determined number of total BFD-RS sets. No detailed description will be given below of Case 0-1, Case 0-2, and Case 1-2 shown in FIG. 3.

Case 2-2 may be permitted. In Case 2-2, the BFD-RS sets and the NBI-RS sets may have a one-to-one correspondence. In Case 2-2, correspondence/association of the BFD-RS sets and the NBI-RS sets may be defined. No detailed description will be given below of Case 2-2 shown in FIG. 3.

### «Case 0-0»

In Case 0-0, at least one of Option 1-1 and Option 1-2 below may be followed.

### {Option 1-1}

The number of total BFD-RS sets being zero need not be permitted. This is because, when no explicit BFD-RS (set) is configured, an implicit determination rule is applied.

In this case, for at least one BFD-RS (set) in a given CC in a specific frequency range (for example, FR2), the number of total BFD-RS sets being zero need not be permitted. The UE need not assume/expect that the number of total BFD-RS sets is zero in a given CC in a specific frequency range (for example, FR2).

### {Option 1-2}

For a given CC in a specific frequency range (for example, FR2), the number of BFD-RS sets being zero may be permitted. The UE may assume/expect that the number of total BFD-RS sets is zero in a given CC in a specific frequency range (for example, FR2).

In this case, a new RRC parameter for indicating enabling/disabling of implicit BFD-RS set determination for a given CC (or a given UE in a given frequency range) may be defined. For example, when the UE is indicated that the parameter indicates disabling (not enabling), the UE may judge that the number of determined total BFD-RS sets is zero.

When zero BFD-RSs are configured/determined (in other words, when no BFD-RS is configured/determined), zero NBI-RSs may be configured/determined (no NBI-RS may be configured/determined). When zero BFD-RSs are configured/determined (in other words, when no BFD-RS is configured/determined), the UE may judge that zero NBI-RSs are configured/determined (no NBI-RS is configured/determined).

Note that, in the present disclosure, when no BFD-RS set is configured/determined, the UE may perform a BFD/BFR procedure by using an individual BFD-RS set. The individual BFD-RS may be a BFD-RS configured according to an existing specification (defined in Rel. 16 or previous versions).

### «Case 1-0»

In Case 1-0, at least one of Option 2-1 and Option 2-2 below may be followed.

### {Option 2-1}

For BFR, it may not be permitted that one BFD-RS set is configured while no NBI-RS set is configured/determined.

This is because, when one BFD-RS set is configured/determined in a given CC, the UE assumes/expects configuration/determination of one NBI-RS in the CC. When a BFD-RS set is configured/determined, the UE need not assume/expect that no NBI-RS set is configured/determined.

In Option 2-1, when one BFD-RS set is configured/determined, one additional NBI-RS set may be configured/determined (Option 2-1-1). In Option 2-1-1, at least one of Option 2-1-1-A and Option 2-1-1-B may be followed.

In Option 2-1-1, one NBI-RS set may be configured as BFR for each cell in a plurality of TRPs. In this case, an NBI-RS may be configured according to a BFR procedure defined in Rel. 16 or previous versions (Option 2-1-1-A).

In Option 2-1-1, one NBI-RS set may be configured as BFR for each TRP (only for one TRP) in a case of using a plurality of TRPs (Option 2-1-1-B).

In this case, the one BFD-RS set / NBI-RS set may be associated with one TRP (for example, another group ID based on a CORESET pool index / single DCI). UE operation in the BFR procedure and after beam recovery may be applied to the associated TRP. The UE may assume/judge that BFD/BFR is not performed on a TRP(s) other than the associated TRP.

Option 2-1-1-B may be applied only to a case where a BFD-RS (set) is configured explicitly. This is because no method of determining one set only for one TRP is defined in a case of determining a BFD-RS (set) implicitly.

Option 2-1-1-B may be applied to a case where a BFD-RS (set) is configured explicitly and a case where a BFD-RS (set) is determined implicitly. For an implicit BFD-RS for multi-DCI, a new RRC parameter may be defined. The RRC parameter may be a parameter for indicating that one or two implicit BFD-RS sets are determined. When the RRC parameter indicates determination of one BFD-RS set, the parameter may indicate information related to a TRP corresponding to the BFD-RS set. For example, the NW may notify the UE of an RRC parameter indicating determination of one BFD-RS set associated with a CORESET pool index of a specific value (for example, 0).

### {Option 2-2}

When one BFD-RS set is configured/determined, no NBI-RS may be configured/determined.

In Option 2-2, when BFR is triggered in a given CC, no information related to new beam identification for the CC may be included in a MAC CE for BFR.

Note that, in the present disclosure, "no information related to new beam identification for the CC is included in a MAC CE for BFR" may be interpreted as "information related to in which CC beam failure has occurred is included but no information related to new beam identification (for example, no new beam index) is included, in a MAC CE for BFR." "Information related to in which CC beam failure has occurred is included but no information related to new beam identification (for example, no new beam index) is included, in a MAC CE for BFR" may mean, for example, that a specific field of a MAC CE for BFR, as an existing MAC CE for BFR (defined in Rel. 16), has failed to find any new beam (no new beam found).

In the present disclosure, "no information related to new beam identification for the CC is included in a MAC CE for BFR" may be interpreted as "no information related to in which CC beam failure has occurred is included in a MAC CE for BFR." "No information related to in which CC beam failure has occurred is included in a MAC CE for BFR" may mean, for example, no MAC CE for BFR is transmitted when no NBI-RS (set) is configured for the UE.

In Option 2-2, since no new beam for recovery is determined/configured, the UE may assume that the CC/TRP is disactivated after BFR is triggered, after a MAC CE for BFR is triggered, or after a given period after reception of a response from the NW. The UE may be indicated/notified to disactivate the CC/TRP after BFR is triggered, after a MAC CE for BFR is triggered, or after a given period after reception of a response from the NW.

### «Case 1-1»

In Case 1-1, the method described in Option 2-2-2 in Case 1-0 described above may be followed. Since Option 2-2-2 has already been described above, the description is omitted here.

### «Case 2-0»

In Case 2-0, at least one of Option 3-1 and Option 3-2 below may be followed.

### {Option 3-1}

For BFR, it need not be permitted that two BFD-RS sets are configured while an NBI-RS set is configured/determined.

When two BFD-RS sets are configured/determined, the UE may assume/expect configuration/determination of an NBI-RS. When a BFD-RS set is configured/determined, the UE need not assume/expect that no NBI-RS set is configured/determined.

When two BFD-RS sets are configured/determined, the UE may assume/expect that at least one NBI-RS set is configured/determined.

When two BFD-RS sets are configured/determined, one NBI-RS set may be configured/determined (Option 3-1-1). In Option 3-1-1, at least one of Options 3-1-1-A, 3-1-1-B, and 3-1-1-C below may be followed.

In Option 3-1-1, one NBI-RS set may be configured to be associated only with one BFD-RS set (Option 3-1-1-A). No NBI-RS associated with another BFD-RS may be present.

In Option 3-1-1-A, to TRPs corresponding to both a BFD-RS set and an NBI-RS set, BFR for each TRP may be applied.

For a TRP not corresponding to an NBI-RS set, no information related to new beam identification for the TRP may be included in a MAC CE for BFR. Since no new beam for recovery is configured/determined for the TRP, the TRP may be deactivated after BFR is triggered.

In Option 3-1-1, one NBI-RS set need not be associated with a BFD-RS set explicitly (Option 3-1-1-B). The UE may assume that one NBI-RS set is associated with a first TRP (for example, a TRP corresponding to the lowest/highest TRP index) by default.

In Option 3-1-1, one NBI-RS set may be configured not to be associated with any BFD-RS set (Option 3-1-1-C).

In Option 3-1-1-C, when beam failure has occurred in one TRP, the UE may report, when being able to find an NBI-RS, an NBI-RS for a given CC by using a MAC CE for BFR.

In this case, operation of the UE at the time of recovery to a new beam may be applied only to the TRP in which the beam failure has been detected. In this case, operation of the UE at the time of recovery to a new beam may be applied to the CC (plurality of (for example, two) TRPs).

In Option 3-1-1-C, when beam failure has occurred in two TRPs, the UE may report, when being able to find an NBI-RS, an NBI-RS for a given CC by using a MAC CE for BFR. In this case, operation of the UE at the time of recovery to a new beam may be applied to the CC (plurality of (for example, two) TRPs).

When two BFD-RS sets are configured/determined, the UE may assume/expect that two NBI-RS sets are configured/determined. In other words, when two BFD-RS sets are configured/determined, two NBI-RS sets may be configured/determined (Option 3-1-2). In Option 3-1-2, the UE may perform the same BFR operation as that in Case 2-2 described above. In this case, the BFD-RS sets and the NBI-RS sets may be associated to have a one-to-one correspondence.

### {Option 3-2}

When two BFD-RS sets are configured/determined, no NBI-RS set may be configured/determined. In Option 3-2, an aspect described in Option 2-2 may be used.

### «Case 2-1»

In Case 2-1, at least one of Option 4-1 and Option 4-2 below may be followed.

### {Option 4-1}

For BFR, it need not be permitted that two BFD-RS sets are configured while one NBI-RS set is configured/determined.

When two BFD-RS sets are configured/determined, the UE need not assume/expect that zero or one NBI-RS set is configured/determined. When two BFD-RS sets are configured/determined, the UE may assume/expect that two NBI-RS sets are configured/determined.

When two BFD-RS sets are configured/determined, the UE need not assume/expect that one NBI-RS set is configured/determined. When two BFD-RS sets are configured/determined, the UE may assume/expect that zero or two NBI-RS sets are configured/determined.

### {Option 4-2}

When two BFD-RS sets are configured/determined, one NBI-RS set may be configured/determined. In Option 4-2, an aspect in Option 3-1-1 described above may be used.

According to the first embodiment above, BFR operation can be appropriately controlled according to the number of configured/determined BFD-RS sets and the number of configured-determined NBI-RS sets.

### <Second Embodiment>

In the second embodiment, a method of implicitly determining/deriving an NBI-RS set will be described. When no NBI-RS set is configured explicitly, the UE may derive/determine an NBI-RS set, based on a specific rule.

The UE may assume that one or more SSBs/CSI-RSs constitute an NBI-RS set in BFR for each cell.

When association between SSB/CSI-RS indices and TRP/CORESET pool indices is configured, the UE may assume that a plurality of SSBs/CSI-RSs related to a first TRP constitute an NBI-RS set for the first TRP while a plurality of SSBs/CSI-RSs related to a second TRP constitute an NBI-RS set for the second TRP, for BFR for each cell.

Note that the first TRP may be a TRP corresponding to the first TRP index, and the second TRP may be a TRP corresponding to the second TRP index. The first TRP may be a TRP corresponding to the lowest (or highest) TRP index, and the second TRP may be a TRP corresponding to the highest (or lowest) TRP index.

Note that the plurality of SSBs/CSI-RSs may be all the SSBs/CSI-RSs of SSBs/CSI-RSs configured in a higher layer (for each TRP) or may be part of the SSBs/CSI-RSs. The CSI-RSs may be periodic (P-)CSI-RSs.

The UE may use higher layer signaling (RRC signaling) to configure whether to enable/disable determination of an implicit NBI-RS (set). The determination of an implicit NBI-RS (set) may be performed for each CC, may be performed for each TRP, or may be performed for each frequency range.

According to the second embodiment above, even when no NBI-RS (set) is configured explicitly for the UE, an NBI-RS (set) can be appropriately derived.

### <Third Embodiment>

In a third embodiment, the number of BFD-RS sets configured explicitly / the number of BFD-RS sets determined implicitly / the number of NBI-RS sets will be described.

In the present disclosure, the number of BFD-RS (NBI-RS) sets (NBI-RSs) may be referred to as the number of explicit BFD-RS (NBI-RS) sets. The number of BFD-RS (NBI-RS) sets determined implicitly may be referred to as the number of implicit BFD-RS (NBI-RS) sets. The total of the number of explicit BFD-RS (NBI-RS) sets and the number of explicit BFD-RS (NBI-RS) sets may be referred to as the number of total BFD-RS (NBI-RS) sets.

It may be defined that the number of total/explicit NBI-RS sets need be the same as the number of explicit BFD-RS sets. The UE may assume/expect that the number of total/explicit NBI-RS sets is the same as the number of explicit BFD-RS sets (Aspect 3-1).

It may be defined that the number of total/explicit NBI-RS sets need be equal to or smaller than the number of explicit BFD-RS sets. The UE may assume/expect that the number of total/explicit NBI-RS sets is equal to or smaller than the number of explicit BFD-RS sets (Aspect 3-2) .

It may be defined that the number of total/explicit NBI-RS sets need be the same as the number of total BFD-RS sets. The UE may assume/expect that the number of total/explicit NBI-RS sets is the same as the number of total BFD-RS sets (Aspect 3-3).

It may be defined that the number of total/explicit NBI-RS sets need be equal to or smaller than the number of total BFD-RS sets. The UE may assume/expect that the number of total/explicit NBI-RS sets is equal to or smaller than the number of total BFD-RS sets (Aspect 3-4).

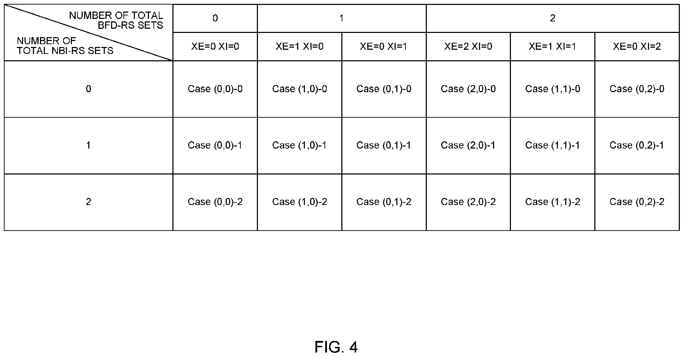

FIG. 4 is a diagram to show examples of the number of BFD-RS sets and the number of NBI-RS sets according to the third embodiment. In the example shown in FIG. 4, each of the number of total BFD-RS sets and the number of total NBI-RS sets can be zero, one, or two. Further, the number X of total BFD-RS sets is divided into the number X_{E} of BFD-RS sets configured explicitly and the number X_{I} of BFD-RS sets determined explicitly.

In FIG. 4, when it is assumed that the number of BFD-RS sets configured explicitly is X_{E}, the number of BFD-RS sets determined explicitly is X_{I}, and the number of total NBI-RS sets is Y, a case corresponding to the numbers is described as "Case (X_{E}, X_{I})-Y."

Whether combinations of the number of BFD-RS sets and the number of NBI-RS sets in Case (0, 0)-0, Case (0, 0)-1, and Case (0,0)-2 shown in the example in FIG. 4 are permitted may be the same as Case 0-0, Case 0-1, and Case 0-2 in FIG. 3.

According to Aspect 3-1 or Aspect 3-3 above, Case (1, 0)-0 need not be permitted. According to Aspect 3-2 or Aspect 3-4 above, Case (1, 0)-0 may be configurable.

According to Aspects 3-1 to 3-4 above, Case (1, 0)-1 may be configurable.

According to Aspects 3-1 to 3-4 above, Case (1, 0)-2 need not be permitted.

According to Aspect 3-3 above, Case (0, 1)-0 need not be permitted. According Aspect 3-1, Aspect 3-2, or Aspect 3-4 above, Case (0, 1)-0 may be configurable.

According to Aspect 3-1 or 3-2 above, Case (0, 1)-1 need not be permitted. According to Aspect 3-3 or Aspect 3-4 above, Case (0, 1)-1 may be configurable.

According to Aspects 3-1 to 3-4 above, Case (0, 1)-2 need not be permitted.

According to Aspect 3-1 or Aspect 3-3 above, Case (2, 0)-0 need not be permitted. According to Aspect 3-2 or 3-4 above, Case (2, 0)-0 may be configurable.

According to Aspect 3-1 or 3-3 above, Case (2, 0)-1 need not be permitted. According to Aspect 3-2 or 3-4 above, Case (2, 0)-1 may be configurable. When Case (2, 0)-1 is configurable, association between an NBI-RS and one BFD-RS set may be defined. The association may be configured for /indicated to the UE by using higher layer signaling / physical layer signaling, or an association rule may be defined in a specification in advance. The rule may be, for example, that the NBI-RS set is associated with a TRP corresponding to the lowest (or highest) TRP index by default.

According to Aspects 3-1 to 3-4 above, Case (2, 0)-2 may be configurable.

According to Aspect 3-1 or Aspect 3-3 above, Case (1, 1)-0 need not be permitted. According to Aspect 3-2 or Aspect 3-4 above, Case (1, 1)-0 may be configurable.

According to Aspect 3-3 above, Case (1, 1)-1 need not be permitted. According Aspect 3-1, Aspect 3-2, or Aspect 3-4 above, Case (1, 1)-1 may be configurable. When Case (1, 1)-1 is configurable, association between an NBI-RS and one BFD-RS set may be defined. The association may be configured for /indicated to the UE by using higher layer signaling / physical layer signaling, or an association rule may be defined in a specification in advance. The rule may be, for example, that the NBI-RS set is associated with a BFD-RS set configured explicitly.

According to Aspect 3-1 or 3-2 above, Case (1, 1)-2 need not be permitted. According to Aspect 3-3 or Aspect 3-4 above, Case (1, 1)-2 may be configurable. When Case (1, 1)-2 is configurable, association between an NBI-RS and one BFD-RS set may be defined. The association may be configured for /indicated to the UE by using higher layer signaling / physical layer signaling, or an association rule may be defined in a specification in advance. The rule may be, for example, that each NBI-RS set is associated with a BFD-RS set corresponding to the same TRP.

According to Aspect 3-3 above, Case (0, 2)-0 need not be permitted. According Aspect 3-1, Aspect 3-2, or Aspect 3-4 above, Case (0, 2)-0 may be configurable.

According Aspect 3-1, Aspect 3-2, or Aspect 3-3 above, Case (0, 2)-1 need not be permitted. According to Aspect 3-4 above, Case (0, 2)-1 may be configurable. When Case (0, 2)-1 is configurable, association between an NBI-RS and one BFD-RS set may be defined. The association may be configured for /indicated to the UE by using higher layer signaling / physical layer signaling, or an association rule may be defined in a specification in advance. The rule may be, for example, that the NBI-RS set is associated with a TRP corresponding to the lowest (or highest) TRP index by default.

According to Aspect 3-1 or 3-2 above, Case (0, 2)-2 need not be permitted. According to Aspect 3-3 or Aspect 3-4 above, Case (0, 2)-2 may be configurable. When Case (0, 2)-2 is configurable, association between an NBI-RS and one BFD-RS set may be defined. The association may be configured for /indicated to the UE by using higher layer signaling / physical layer signaling, or an association rule may be defined in a specification in advance. The rule may be, for example, that each NBI-RS set is associated with a BFD-RS set corresponding to the same TRP.

According to the third embodiment above, BFR operation can be more flexibly controlled according to the number of configured/determined BFD-RS sets and the number of configured-determined NBI-RS sets.

### <Fourth Embodiment>

A higher layer parameter (RRC IE) / UE capability corresponding to the function (characteristics, feature) in at least one of the plurality of above embodiments may be defined. The UE capability may indicate to support this function.

The UE configured with the higher layer parameter corresponding to the function (enabling the function) may perform the function. The "UE not configured with the higher layer parameter corresponding to the function does not perform the function (for example, follows Rel. 15/16)" may be defined.

The UE that has reported the UE capability indicating support of the function may perform the function. The "UE that has not reported the UE capability indicating support of the function does not perform the function (for example, follows Rel. 15/16)" may be defined.

When the UE reports the UE capability indicating support of the function and a higher layer parameter corresponding to the function is configured, the UE may perform the function. "When the UE does not report the UE capability indicating support of the function or when the UE is not configured with the higher layer parameter corresponding to the function, the UE does not perform the function (for example, follows Rel. 15/16)" may be defined.

The UE capability may indicate whether the UE supports this function.

The function may be configuration of an explicit BFD-RS set / determination of an implicit BFD-RS set.

The function may be configuration of an explicit NBI-RS set / determination of an implicit NBI-RS set.

The UE capability may be defined depending on whether the UE supports configuration of one/two BFD-RS sets / two BFD-RS sets at maximum in BFR for each TRP for a plurality of TRPs based on single DCI / multi-DCI. The UE capability may be defined by the number of RS resources in a BFD-RS set.

The UE capability may be defined depending on whether the UE supports configuration of one/two NBI-RS sets / two NBI-RS sets at maximum in BFR for each TRP for a plurality of TRPs based on single DCI / multi-DCI. The UE capability may be defined by the number of RS resources in an NBI-RS set.

The UE capability may be defined depending on whether the UE supports, when one/two BFD-RS sets are configured in BFR for each TRP, configuration of one/two NBI-RS sets.

The UE capability may be defined depending on whether the UE supports configuration of two BFD-RS sets and one NBI-RS set.

The UE capability may be defined depending on whether the UE supports association between one NBI-RS set and one BFD-RS set of two BFD-RS sets.

The UE capability may be defined depending on whether the UE supports association between one NBI-RS set and two BFD-RS sets.

The UE capability may be defined depending on whether the UE supports deactivation of a TRP/CC in a case of performing BFR in a TRP/CC without an NBI-RS (set). The deactivation may be deactivation assumed by the UE.

The UE capability may be defined depending on whether the UE supports enabling/disabling of determination of an implicit BFD-RS (set). The enabling/disabling of determination of an implicit BFD-RS (set) may be performed for each CC / for each plurality of CCs, may be performed for each TRP, or may be performed for each frequency range. The enabling/disabling of determination of an implicit BFD-RS (set) may be performed for each single set or may be performed for each two sets.

The UE capability may be defined depending on whether the UE supports determination of an implicit NBI-RS (set). The determination of an implicit NBI-RS (set) may be performed for each CC / for each plurality of CCs, may be performed for each TRP, or may be performed for each frequency range. The determination of an implicit NBI-RS (set) may be performed for each single set or may be performed for each two sets.

According to the fourth embodiment above, the UE can implement the above functions while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

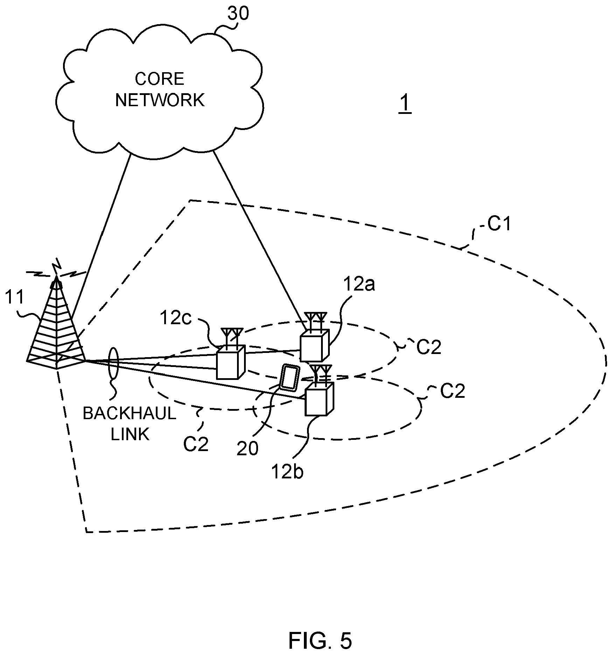

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

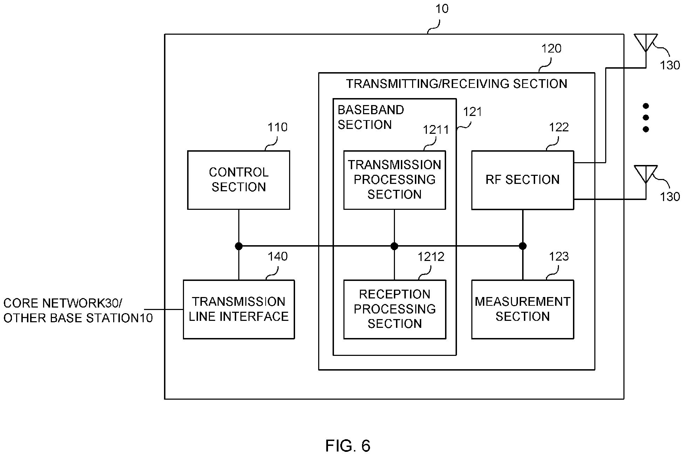

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may assume at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets. The transmitting/receiving section 120 may transmit at least one of one or more BFD-RSs included in the BFD-RS set and one or more NBI-RSs included in the NBI-RS set, determined based on the assumption (first, third embodiments).

### (User Terminal)

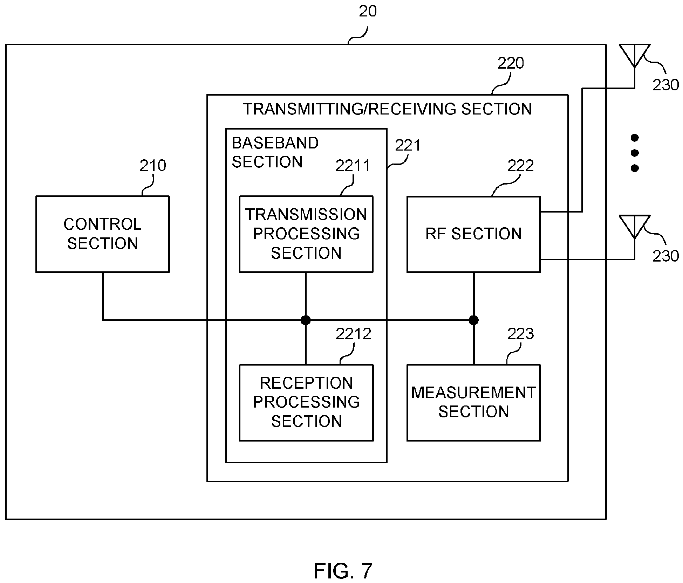

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The control section 210 may assume at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets. The transmitting/receiving section 220 may receive at least one of one or more BFD-RSs included in the BFD-RS set and one or more NBI-RSs included in the NBI-RS set determined based on the assumption (first, third embodiments).

The control section 210 may assume that a total number of the number of configured BFD-RS sets and the number of determined BFD-RS sets is equal to or larger than a total number of the number of configured NBI-RS sets and the number of determined NBI-RS sets (first embodiment).

The transmitting/receiving section 220 may receive a higher layer parameter that enables at least one of the determination of the BFD-RS set and the determination of the NBI-RS set (first, second embodiments).

The control section 210 may perform the determination of the NBI-RS set, based on at least one of an index related to a synchronization signal block configured by a higher layer signaling and an index related to a channel state information reference signal (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

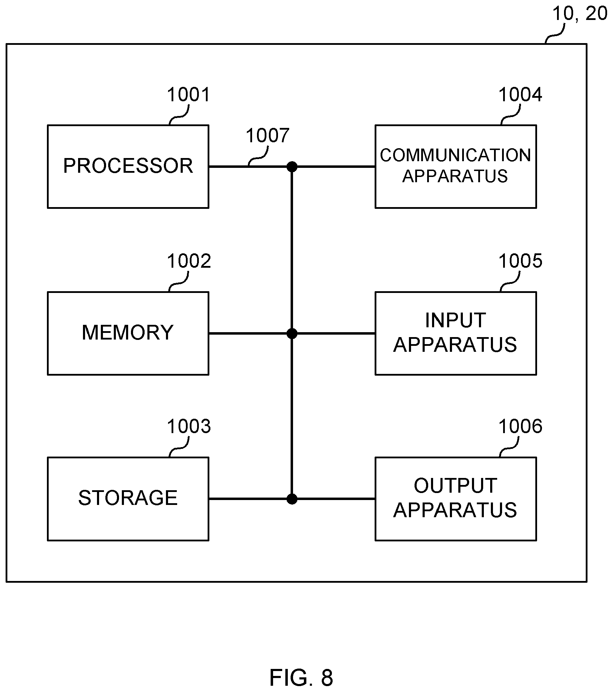

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to -13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" and so on may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that assumes at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets; and
a receiving section that receives at least one of one or more BFD-RSs included in the BFD-RS set and one or more NBI-RSs included in the NBI-RS set, determined based on the assumption.

2. The terminal according to claim 1, wherein
the control section assumes that a total number of the number of configured BFD-RS sets and the number of determined BFD-RS sets is equal to or larger than a total number of the number of configured NBI-RS sets and the number of determined NBI-RS sets.

3. The terminal according to claim 1, wherein
the receiving section receives a higher layer parameter that enables at least one of the determination of the BFD-RS set and the determination of the NBI-RS set.

4. The terminal according to claim 1, wherein
the control section performs the determination of the NBI-RS set, based on at least one of an index related to a synchronization signal block configured by a higher layer signaling and an index related to a channel state information reference signal.

5. A radio communication method for a terminal, the radio communication method comprising:
assuming at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets; and
receiving at least one of one or more BFD-RSs included in the BFD-RS set and one or more NBI-RSs included in the NBI-RS set, determined based on the assumption.

6. A base station comprising:
a control section that assumes at least one of configuration of zero or more beam failure detection reference signal (BFD-RS) sets and determination of zero or more BFD-RS sets and at least one of configuration of zero or more new beam identification reference signal (NBI-RS) sets and determination of zero or more NBI-RS sets; and
a transmitting section that transmits at least one of one or more BFD-RSs included in the BFD-RS set and one or more NBI-RSs included in the NBI-RS set, determined based on the assumption.
